(19) Europäisches Patentamt
European Patent Office
Office européen des brevets

(11) **EP 4 570 750 A1**

(12) **EUROPEAN PATENT APPLICATION**
published in accordance with Art. 153(4) EPC

(43) Date of publication:
**18.06.2025 Bulletin 2025/25**

(21) Application number: **23852463.1**

(22) Date of filing: **02.08.2023**

(51) International Patent Classification (IPC):
**C01B 32/158** (2017.01)    **H01G 11/36** (2013.01)
**H01G 11/86** (2013.01)    **H01M 10/058** (2010.01)
**H01M 50/449** (2021.01)

(52) Cooperative Patent Classification (CPC):
**C01B 32/158; H01G 11/36; H01G 11/86;
H01M 10/058; H01M 50/449;** Y02E 60/10

(86) International application number:
**PCT/JP2023/028311**

(87) International publication number:
**WO 2024/034496 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022  JP 2022129084**

(71) Applicant: **Zeon Corporation
Tokyo 100-8246 (JP)**

(72) Inventor: **YAMAGISHI Tomoko
Tokyo 100-8246 (JP)**

(74) Representative: **Maiwald GmbH
Elisenhof
Elisenstraße 3
80335 München (DE)**

(54) **CARBON SHEET, METHOD FOR PRODUCING SAME, MULTILAYER BODY AND POWER STORAGE DEVICE**

(57)     Provided are a carbon sheet having excellent performance in terms of inhibiting lithium dendrite growth and a method of producing this carbon sheet. Also provided are a laminate and an electrical storage device that include a carbon sheet having excellent performance in terms of inhibiting lithium dendrite growth. The carbon sheet is a carbon sheet containing carbon nanotubes, wherein the carbon nanotubes and the carbon sheet each have pores, and the distribution states of these pores satisfy specific requirements.

EP 4 570 750 A1

## Description

TECHNICAL FIELD

The present disclosure relates to a carbon sheet and method of producing the same, a laminate, and an electrical storage device.

BACKGROUND

Carbon nanotubes (hereinafter, also referred to as "CNTs") have been attracting interest as materials having excellent electrical conductivity, thermal conductivity, electromagnetic wave shielding performance, and mechanical characteristics. Moreover, focusing on these characteristics of CNTs, it has been proposed that a carbon nanotube film (hereinafter, also referred to as a "CNT film" or "carbon film") in which a plurality of CNTs are assembled into the form of a film is produced and is used as an electrically conductive sheet, a heat conductive sheet, an electromagnetic wave absorbing sheet, or the like. Note that such a CNT film is also referred to as "buckypaper".

CNTs are fine structures having diameters on the order of nanometers, and thus have poor handleability and processability by themselves. Therefore, it has been proposed that a carbon film is produced by, for example, preparing a solution having CNTs dispersed therein (CNT dispersion liquid), applying this solution onto a substrate or the like, and removing components other than the CNTs so as to cause an assembly of CNTs contained in the CNT dispersion liquid to form a film. In recent years, attempts have been made to use carbon films in the electrodes of lithium secondary batteries with the aim of inhibiting the growth of lithium dendrites that can occur inside of lithium ion secondary batteries during use thereof (for example, refer to Non-Patent Literature (NPL) 1 and 2).

CITATION LIST

Non-Patent Literature

NPL 1: Zhaowei Sun et al. "Robust Expandable Carbon Nanotube Scaffold for Ultrahigh-Capacity Lithium-Metal Anodes", Advanced Materials, Germany, WILEY-VCH, 2018, 30, 1800884
NPL 2: Rodrigo V. Salvatierra et al. "Suppressing Li Metal Dendrites Through a Solid Li-Ion Backup Layer", Advanced Materials, Germany, WILEY-VCH, 2018, 30, 1803869

SUMMARY

(Technical Problem)

From a viewpoint of improving battery performance of a lithium ion secondary battery, there is room for further improvement of an electrode that includes a previously proposed carbon film such as described above with regard to performance in terms of inhibiting lithium dendrite growth.

Accordingly, one object of the present disclosure is to provide a carbon sheet having excellent performance in terms of inhibiting lithium dendrite growth and a method of producing this carbon sheet.

Another object of the present disclosure is to provide a laminate and an electrical storage device that include a carbon sheet having excellent performance in terms of inhibiting lithium dendrite growth.

(Solution to Problem)

The inventor made diligent studies to achieve the objects described above. The inventor made a new discovery that performance of a carbon sheet containing carbon nanotubes in terms of inhibiting lithium dendrite growth remarkably increases in a case in which the carbon nanotubes and the carbon sheet each have pores and in which the distribution states of these pores satisfy specific requirements. In this manner, the inventor completed the present disclosure.

Specifically, with the aim of advantageously solving the problem set forth above, [1] a presently disclosed carbon sheet comprises carbon nanotubes, wherein a distribution curve of pore volume (Dv(logd)) in units of cc/g on a vertical axis and pore diameter in units of nm on a horizontal axis obtained through QSDFT (Quenched Solid Density Functional Theory) analysis of data obtained through measurement of nitrogen adsorption of the carbon nanotubes has a peak of 0.3 cc/g or more in a pore diameter range of not less than 0.9 nm and not more than 1.1 nm, a distribution curve of pore volume (DVp/dlogdp) in units of cc/g on a vertical axis and pore diameter in units of nm on a horizontal axis obtained through measurement of nitrogen adsorption of the carbon sheet has a peak of 1.5 cc/g or more in a pore diameter range of 60 nm or less, and a distribution curve of pore volume (DVp/dlogdp) in units of cc/g on a vertical axis and pore diameter in units of $\mu$m on a horizontal axis obtained through measurement of mercury intrusion of the carbon sheet has a peak of 2.0 cc/g or more in a pore diameter range of not less than 0.1 $\mu$m and not more than 10 $\mu$m. A carbon sheet that satisfies the specific properties set forth above has excellent performance in terms of inhibiting lithium dendrite growth.

The above-described properties of carbon nanotubes and a carbon sheet that are referred to in the present specification can be measured by methods described in the EXAMPLES section.

[2] In the carbon sheet according to the foregoing [1], the carbon nanotubes preferably include single-walled carbon nanotubes in a proportion of 50 mass% or more. When 50 mass% or more of the carbon nanotubes that are contained in the carbon sheet are single-walled carbon nanotubes, performance of the carbon sheet in terms of inhibiting lithium dendrite growth can be even further increased.

[3] In the carbon sheet according to the foregoing [1] or [2], the carbon sheet preferably has a porous structure with a number-average diameter of not less than 50 nm and not more than 200 nm at a sheet surface when subjected to charge/discharge treatment. When a porous structure with a number-average diameter of not less than 50 nm and not more than 200 nm is formed at the surface of the carbon sheet after it has undergone charge/discharge treatment, performance of the carbon sheet in terms of inhibiting lithium dendrite growth can be even further increased.

[4] Moreover, with the aim of advantageously solving the problem set forth above, a presently disclosed laminate comprises: the carbon sheet according to any one of the foregoing [1] to [3]; and a separator. The presently disclosed laminate has excellent performance in terms of inhibiting lithium dendrite growth in a situation in which the presently disclosed laminate is used in an electrical storage device where a lithium-containing material is used.

[5] Furthermore, with the aim of advantageously solving the problem set forth above, a presently disclosed electrical storage device comprises: an electrode containing a lithium-containing active material; and a separator, wherein the carbon sheet according to any one of the foregoing [1] to [3] is interposed between the electrode and the separator. The presently disclosed electrical storage device has excellent performance in terms of inhibiting lithium dendrite growth.

[6] In the presently disclosed electrical storage device according to the foregoing [5], a porous structure with a number-average diameter of not less than 50 nm and not more than 200 nm is formed at a surface of the carbon sheet after charging and discharging. The electrical storage device set forth above has excellent performance in terms of inhibiting lithium dendrite growth.

[7] Also, with the aim of advantageously solving the problem set forth above, a presently disclosed method of produced a carbon sheet comprises: performing dispersing treatment of a mixture of a solvent and carbon nanotubes for which a distribution curve of pore volume (Dv(logd)) in units of cc/g on a vertical axis and pore diameter in units of nm on a horizontal axis obtained through QSDFT analysis of data obtained through measurement of nitrogen adsorption has a peak of 0.3 cc/g or more in a pore diameter range of not less than 0.9 nm and not more than 1.1 nm to obtain a carbon nanotube dispersion liquid; and removing the solvent from the carbon nanotube dispersion liquid to form a carbon sheet. The method of producing a carbon sheet set forth above enables efficient production of an electrical storage device having excellent performance in terms of inhibiting lithium dendrite growth.

(Advantageous Effect)

According to the present disclosure, it is possible to provide a carbon sheet having excellent performance in terms of inhibiting lithium dendrite growth and a method of producing this carbon sheet.

Moreover, according to the present disclosure, it is possible to provide a laminate and an electrical storage device that include a carbon sheet having excellent performance in terms of inhibiting lithium dendrite growth.

DETAILED DESCRIPTION

The following provides a detailed description of embodiments of the present disclosure. The presently disclosed carbon sheet can be efficiently produced by the presently disclosed method of producing a carbon sheet. Moreover, the presently disclosed electrical storage device can be efficiently produced by the presently disclosed method of producing an electrical storage device.

(Carbon sheet)

The presently disclosed carbon sheet contains carbon nanotubes (hereinafter, also abbreviated as "CNTs"). These carbon nanotubes exhibit a peak of 0.3 cc/g or more in a pore diameter range of not less than 0.9 nm and not more than 1.1 nm on a distribution curve of pore volume (Dv(logd) [cc/g]) on a vertical axis and pore diameter [nm] on a horizontal axis obtained through QSDFT analysis of data obtained through measurement of nitrogen adsorption. Moreover, the presently disclosed carbon sheet exhibits: (1) a peak of 1.5 cc/g or more in a pore diameter range of 60 nm or less on a distribution curve of pore volume (DVp/dlogdp [cc/g]) on a vertical axis and pore diameter [nm] on a horizontal axis obtained through measurement of nitrogen adsorption; and (2) a peak of 2.0 cc/g or more in a pore diameter range of not less than 0.1 μm and not more than 10 μm on a distribution curve of pore volume (DVp/dlogdp [cc/g]) on a vertical axis and pore diameter [μm] on a horizontal axis obtained through measurement of mercury intrusion. A carbon sheet that contains CNTs satisfying such a property and that has a porous structure satisfying (1) and (2) set forth above has excellent performance in terms of inhibiting lithium dendrite growth. Although the mechanism for this is not clear, it is presumed that when a carbon sheet has a porous structure including pores of a prescribed size, growth of deposited lithium into dendritic crystals can be inhibited as a result of the deposited lithium being captured inside of pores while the size of the deposited lithium is still small. Moreover, when a carbon sheet has excellent performance in terms of inhibiting lithium dendrite growth, this carbon sheet can effectively inhibit the occurrence of short circuiting or deactivation of lithium caused by lithium dendrite formation inside of an electrical storage device and thus can enhance cycle characteristics of the electrical storage device. Note that a short circuit can occur when a lithium dendrite damages a separator that is included in an electrical storage device, for example.

<Carbon nanotubes>

The CNTs that are contained in the presently disclosed carbon sheet are required to satisfy a condition that a distribution curve of pore volume (Dv(logd) [cc/g]) on a vertical axis and pore diameter [nm] on a horizontal axis obtained through QSDFT analysis of data obtained through measurement of nitrogen adsorption of the CNTs has a peak of 0.3 cc/g or more in a pore diameter range of not less than 0.9 nm and not more than 1.1 nm. Moreover, from a viewpoint of forming a good porous structure in the carbon sheet and even further increasing performance of the sheet in terms of inhibiting lithium dendrite growth, the size of the peak that is detected in the pore diameter range of not less than 0.9 nm and not more than 1.1 nm is preferably 1.5 cc/g or less, more preferably 1.2 cc/g or less, and even more preferably 0.9 cc/g or less.

Although single-walled carbon nanotubes and/or multi-walled carbon nanotubes can be used as the CNTs without any specific limitations, it is preferable that single-walled carbon nanotubes (single-walled CNTs) are included as a main component. Examples of components other than single-walled CNTs that can be included among the CNTs include multi-walled carbon nanotubes (multi-walled CNTs). The proportion constituted by single-walled CNTs among the total mass of the CNTs is preferably 50 mass% or more, more preferably 90 mass% or more, even more preferably 95 mass% or more, and may be 100 mass%. When the proportion constituted by single-walled carbon nanotubes among the carbon nanotubes that are contained in the carbon sheet is 50 mass% or more, performance of the carbon sheet in terms of inhibiting lithium dendrite growth can be even further increased. Note that in a case in which the CNTs include multi-walled CNTs, the number of walls of the multi-walled CNTs is preferably 5 or less.

Moreover, the carbon purity of the CNTs is preferably 95.0 mass% or higher, and more preferably 99.0 mass% or higher. Note that the upper limit for the carbon purity of the CNTs is not specifically limited and can be lower than 99.9999%, for example.

The BET specific surface area of the CNTs is preferably 500 $m^2/g$ or more, and more preferably 600 $m^2/g$ or more, and is preferably 2,000 $m^2/g$ or less, more preferably 1,800 $m^2/g$ or less, and even more preferably 1,600 $m^2/g$ or less. When the BET specific surface area is in any of the ranges set forth above, performance of the carbon sheet in terms of inhibiting lithium dendrite formation can be even further increased. Note that the "BET specific surface area" referred to in the present disclosure indicates the nitrogen adsorption specific surface area measured by the BET (Brunauer-Emmett-Teller) method.

The CNTs can be produced by a known CNT synthesis method such as arc discharge, laser ablation, or chemical vapor deposition (CVD) without any specific limitations. Specifically, the CNTs can be efficiently produced, for example, by a method in which, during synthesis of CNTs through chemical vapor deposition (CVD) by supplying a source compound and a carrier gas onto a substrate having a catalyst layer for carbon nanotube production at the surface thereof, a trace amount of an oxidizing agent (catalyst activating material) is provided in the system to dramatically improve catalytic activity of the catalyst layer (super growth method; refer to WO2006/011655A1). Hereinafter, carbon nanotubes that are obtained by the super growth method are also referred to as "SGCNTs".

A t-plot for the CNTs that is obtained from an adsorption isotherm preferably exhibits a convex upward shape.

In a substance having pores at its surface, the growth of an adsorbed layer of nitrogen gas is categorized into the following processes (1) to (3). The gradient of the t-plot changes in accordance with processes (1) to (3).

(1) A process in which a single molecule adsorption layer of nitrogen molecules is formed over the entire surface

(2) A process in which a multi-molecule adsorption layer is formed and is accompanied by capillary condensation filling of pores

(3) A process in which a multi-molecule adsorption layer is formed at a surface that appears to be non-porous due to the pores being filled by nitrogen

In a t-plot having a convex upward shape, the plot is on a straight line passing through the origin in a region in which the average adsorbed nitrogen gas layer thickness t is small, but, as t increases, the plot deviates downward from the straight line. When CNTs have the t-plot shape described above, this indicates that the CNTs have a large ratio of internal specific surface area relative to total specific surface area and that numerous openings are formed in the CNTs. It is presumed that as a result, a porous structure satisfying (1) and (2) set forth above is more easily formed in a carbon sheet that is formed using these CNTs.

A bending point of the t-plot for the CNTs is preferably in a range satisfying $0.2 \leq t (nm) \leq 1.5$, more preferably in a range satisfying $0.45 \leq t (nm) \leq 1.5$, and even more preferably in a range satisfying $0.55 \leq t (nm) \leq 1.0$. In the case of CNTs for which the bending point of the t-plot is in any of these ranges, these CNTs have a lower tendency to aggregate in a dispersion liquid when the CNTs are used to produce a dispersion liquid. As a result, good film formation properties can be achieved during carbon sheet formation.

The "position of the bending point" is an intersection point of a linear approximation A for the above-described process (1) and a linear approximation B for the above-described process (3).

A ratio (S2/S1) of internal specific surface area S2 relative to total specific surface area S1 obtained from the t-plot for the CNTs is preferably not less than 0.05 and not more than 0.30. In the case of CNTs for which the value of S2/S1 is in this range, these CNTs have an even lower tendency to aggregate in a dispersion liquid when the CNTs are used to produce a carbon nanotube dispersion liquid. As a result, it is possible to obtain a carbon nanotube dispersion liquid having excellent stabilization of a CNT network in the dispersion liquid.

The total specific surface area S1 and the internal specific surface area S2 of the CNTs can be determined from the t-plot for the CNTs. Specifically, the total specific surface area S1 and external specific surface area S3 can first be determined from the gradient of the linear approximation of process (1) and the gradient of the linear approximation of process (3), respectively. The internal specific surface area S2 can then be calculated by subtracting the external specific surface area S3 from the total specific surface area S1.

Moreover, measurement of an adsorption isotherm for the CNTs, preparation of a t-plot, and calculation of the total specific surface area S1 and the internal specific surface area S2 based on analysis of the t-plot can be performed using a BELSORP®-mini (BELSORP is a registered trademark in Japan, other countries, or both), for example, which is a commercially available measurement instrument produced by Bel Japan Inc.

The average diameter of the CNTs is preferably 1 nm or more, and is preferably 60 nm or less, more preferably 30 nm or less, and even more preferably 10 nm or less.

The average length of the CNTs is preferably 10 $\mu$m or more, more preferably 50 $\mu$m or more, and even more preferably 80 $\mu$m or more, and is preferably 600 $\mu$m or less, more preferably 500 $\mu$m or less, and even more preferably 400 $\mu$m or less.

When CNTs having an average diameter and/or average length that are in any of the ranges set forth above are used to produce a carbon nanotube dispersion liquid, these CNTs have a low tendency to aggregate in the carbon nanotube dispersion liquid, and it is possible to produce a stabilized CNT dispersion liquid.

Carbon nanotubes that are in the form of a CNT assembly may be used. The CNTs that are in the form of a CNT assembly may, for example, be a CNT assembly that satisfies at least any one of conditions (1) to (3) described below.

<<CNT assembly>>

It is preferable to use a CNT assembly satisfying at least any one of conditions (1) to (3) described below as a CNT assembly that is used in formation of the carbon sheet.

(1) In a spectrum obtained by Fourier-transform infrared spectroscopy with respect to carbon nanotube dispersions (i.e., dispersed carbon nanotubes) obtained by dispersing the carbon nanotube assembly such as to have a bundle length of 10 $\mu$m or more, at least one peak based on plasmon resonance of the carbon nanotube dispersions is present in a wavenumber range of more than 300 $cm^{-1}$ and not more than 2,000 $cm^{-1}$.

(2) On a pore distribution curve for the carbon nanotube assembly indicating a relationship between pore diameter and Log differential pore volume that is obtained based on the Barrett-Joyner-Halenda method from an adsorption isotherm of liquid nitrogen at 77 K, a largest peak is in a pore diameter range of more than 100 nm and less than 400 nm.

(3) In a two-dimensional spatial frequency spectrum of an electron microscope image of the carbon nanotube assembly, at least one peak is present in a range of not less than 1 $\mu m^{-1}$ and not more than 100 $\mu m^{-1}$.

The following provides a more detailed description of each of the conditions (1) to (3).

<<Condition (1)>>

Condition (1) stipulates that "in a spectrum obtained by Fourier-transform infrared spectroscopy with respect to carbon nanotube dispersions obtained by dispersing the carbon nanotube assembly such as to have a bundle length of 10 $\mu m$ or more, at least one peak based on plasmon resonance of the carbon nanotube dispersions is present in a wavenumber range of more than 300 $cm^{-1}$ and not more than 2,000 $cm^{-1}$". Strong absorption characteristics in a far infrared region are widely known as optical characteristics of CNTs. Such strong absorption characteristics in a far infrared region are thought to be due to the diameter and length of CNTs. Note that absorption characteristics in the far infrared region, and, more specifically, the relationship between a peak based on plasmon resonance of CNTs and length of CNTs is discussed in detail in non-patent literature (T. Morimoto et al., "Length-Dependent Plasmon Resonance in Single-Walled Carbon Nanotubes", pp 9897-9904, Vol. 8, No. 10, ACS NANO, 2014).
From a viewpoint of even further increasing performance of the obtained carbon sheet in terms of inhibiting dendrite deposition, the peak based on plasmon resonance of the CNTs in condition (1) is preferably present in a wavenumber range of more than 300 $cm^{-1}$ and not more than 2,000 $cm^{-1}$, more preferably present in a wavenumber range of not less than 500 $cm^{-1}$ and not more than 2,000 $cm^{-1}$, and even more preferably present in a wavenumber range of not less than 700 $cm^{-1}$ and not more than 2,000 $cm^{-1}$.
In a spectrum obtained for the CNT assembly through Fourier-transform infrared spectroscopy, in addition to a comparatively gentle peak that is based on plasmon resonance of the CNT dispersions, sharp peaks may also be confirmed near a wavenumber of 840 $cm^{-1}$, near a wavenumber of 1300 $cm^{-1}$, and near a wavenumber of 1700 $cm^{-1}$. These sharp peaks do not correspond to a "peak based on plasmon resonance of the carbon nanotube dispersions", but rather correspond to infrared absorption attributed to functional groups. More specifically, a sharp peak near a wavenumber of 840 $cm^{-1}$ is due to C-H out-of-plane bending vibration, a sharp peak near a wavenumber of 1300 $cm^{-1}$ is due to three-membered epoxy ring stretching vibration, and a sharp peak near a wavenumber of 1700 $cm^{-1}$ is due to C=O stretching vibration. Note that since a peak similar to an S1 peak that differs from plasmon resonance may be detected in a region at a wavenumber of more than 2,000 $cm^{-1}$ as alluded to in the aforementioned non-patent literature of T. Morimoto et al., the upper limit for judgement of the presence of a peak based on plasmon resonance of the CNT dispersions in condition (1) can be set as 2,000 $cm^{-1}$ or less.
In acquisition of a spectrum by Fourier-transform infrared spectroscopy in condition (1), it is necessary for the CNT assembly to be dispersed such that the bundle length is 10 $\mu m$ or more to obtain CNT dispersions. For example, by blending the CNT assembly, water, and a surfactant (for example, sodium dodecylbenzenesulfonate) in a suitable ratio and performing stirring treatment by ultrasonication or the like for a specific time, it is possible to obtain a dispersion liquid having CNT dispersions dispersed with a bundle length of 10 $\mu m$ or more in water.
The bundle length of CNT dispersions can be determined through analysis using a wet image analysis-type particle size measurement instrument. This measurement instrument can calculate the area of each dispersion from an image acquired through imaging of the CNT dispersions and can determine the diameter of a circle having the calculated area (hereinafter, also referred to as the "ISO area diameter"). In the present specification, the bundle length of each dispersion is defined as the value of the ISO area diameter that is obtained in this manner.

<<Condition (2)>>

Condition (2) stipulates that "on a pore distribution curve, a largest peak is in a pore diameter range of more than 100 nm and less than 400 nm". A pore distribution of the carbon nanotube assembly can be determined based on the BJH method from an adsorption isotherm of liquid nitrogen at 77 K. When a peak on a pore distribution curve obtained through measurement of the carbon nanotube assembly is in a range of more than 100 nm, this means that gaps of a certain size are present between the CNTs in the carbon nanotube assembly and that the CNTs are not in an excessively densely aggregated state. Note that the upper limit of 400 nm is the measurement limit in a situation in which a BELSORP-mini II, for example, is used as a measurement instrument.
From a viewpoint of even further increasing performance of the obtained carbon sheet in terms of inhibiting dendrite deposition, it is preferable that at the largest peak on the pore distribution curve for the CNT assembly, a value of Log differential pore volume is 2.0 $cm^3/g$ or more.

<<Condition (3)>>

Condition (3) stipulates that "in a two-dimensional spatial frequency spectrum of an electron microscope image of the carbon nanotube assembly, at least one peak is present in a range of not less than 1 $\mu m^{-1}$ and not more than 100 $\mu m^{-1}$". Satisfaction of this condition can be judged as outlined below. First, a CNT assembly that is to be judged is observed under magnification (for example, $\times$ 10,000) using an electron microscope (for example, a field emission scanning electron microscope), and a plurality (for example, 10) electron microscope images are acquired in a 1 cm-square viewing field. The acquired electron microscope images are subjected to fast Fourier-transform (FFT) processing to obtain a two-dimensional spatial frequency spectrum. The two-dimensional spatial frequency spectra obtained for the electron microscope images are then subjected to binarization processing, and an average value of the position of a peak appearing furthest to the high frequency side is determined. In a case in which the obtained average value of the peak position is in a range of not less than 1 $\mu m^{-1}$ and not more than 100 $\mu m^{-1}$, condition (3) can be judged to be satisfied. Note that "peaks" used in the above judgement are taken be distinct peaks obtained through isolated point extraction processing (i.e., the reverse operation of isolated point removal). Accordingly, in a case in which a distinct peak is not obtained in a range of not less than 1 $\mu m^{-1}$ and not more than 100 $\mu m^{-1}$ when isolated point extraction processing is performed, condition (3) can be judged to not be satisfied.

From a viewpoint of even further increasing performance of the obtained carbon sheet in terms of inhibiting dendrite deposition, it is preferable that a peak of the two-dimensional spatial frequency spectrum is present in a range of not less than 2.6 $\mu m^{-1}$ and not more than 100 $\mu m^{-1}$.

Moreover, from a viewpoint of even further increasing performance of the obtained carbon sheet in terms of inhibiting dendrite deposition, it is preferable that the CNT assembly satisfies at least two of the conditions (1) to (3), and more preferable that the CNT assembly satisfies all of the conditions (1) to (3).

<<Other properties>>

Note that the CNT assembly that can be used in production of the presently disclosed carbon sheet preferably has the following properties in addition to those set forth above in the conditions (1) to (3).

The tapped bulk density of the CNT assembly is preferably not less than 0.001 $g/cm^3$ and not more than 0.2 $g/cm^3$. A CNT assembly having a density in such a range does not have excessively strong linkage between CNTs and thus has excellent dispersibility and can be shaped into various shapes. When the tapped bulk density of the CNT assembly is 0.2 $g/cm^3$ or less, linkages between CNTs are weakened, which makes it easy to homogeneously disperse the CNT assembly in a solvent or the like by stirring. Moreover, when the tapped bulk density of the CNT assembly is 0.001 $g/cm^3$ or more, integrity of the CNT assembly improves, and handling is facilitated. The tapped bulk density is the apparent bulk density in a densely packed state obtained by loading the CNT assembly in a powdered form into a vessel and then performing tapping, vibration, or the like so as to reduce gaps between powder particles.

The G/D ratio of the CNT assembly is preferably 1 or more, and can be set as 5 or less. In the case of a CNT assembly having a G/D ratio of less than 1, it may be the case that the crystallinity of single-walled CNTs is low and that a large amount of dirt such as amorphous carbon is present. In a Raman spectrum of CNTs that is measured by a Raman spectrometer, vibration modes referred to as a G band (near 1600 $cm^{-1}$) and a D band (near 1350 $cm^{-1}$) are observed. The G band is a vibration mode based on the hexagonal lattice structure of graphite forming cylindrical surfaces of the CNTs and the D band is a vibration mode based on amorphous locations.

It is desirable for the purity of the CNT assembly to be as high as possible in order to obtain a high specific surface area. The term "purity" as used here refers to the carbon purity, which is a value indicating the percentage of mass of the CNT assembly that is constituted by carbon. Although there is no upper limit on the purity in order to obtain a high specific surface area, it is difficult in terms of production to obtain a CNT assembly having a purity of 99.9999 mass% or higher. When the purity is lower than 95.0 mass%, it becomes difficult to obtain a specific surface area of more than 1,000 $m^2/g$ in a state in which opening treatment has not been performed. Moreover, when the CNT assembly contains metal impurities and has a carbon purity of less than 95.0 mass%, the metal impurities react with oxygen in opening treatment to hinder opening of the CNTs, and, as a result, it becomes difficult to increase the specific surface area. Based on these points, it is preferable that the purity of single-walled CNTs is 95.0 mass% or higher.

The purity of the specific CNT assembly satisfying at least any one of the conditions (1) to (3) described above can normally be set as 98.0 mass% or higher, and preferably as 99.0 mass% or higher even without performing purification treatment. Such a CNT assembly is almost free of contamination with impurities and can sufficiently exhibit the various characteristics inherent in CNTs. The carbon purity of the CNT assembly can be determined by elemental analysis using X-ray fluorescence, thermogravimetric analysis (TGA), or the like.

<<Production method of CNT assembly>>

The method by which the CNT assembly is produced is not specifically limited, and the production conditions can be adjusted according to the desired properties. For example, a CNT assembly that satisfies at least any one of the conditions (1) to (3) described above can be produced according to a method described in WO2022/114235A1, for example.

<Properties of carbon sheet>

<<Nitrogen adsorption and mercury intrusion>>

Measurement results obtained through measurement of nitrogen adsorption and mercury intrusion of the presently disclosed carbon sheet are required to satisfy prescribed conditions. Specifically, a distribution curve of pore volume (DVp/dlogdp [cc/g]) on a vertical axis and pore diameter [nm] on a horizontal axis obtained through measurement of nitrogen adsorption of the carbon sheet is required to have a peak of 1.5 cc/g or more in a pore diameter range of 60 nm or less. Note that although no specific limitations are placed on the lower limit threshold value for the pore diameter at which the peak appears on the distribution curve obtained through measurement of nitrogen adsorption, this value is preferably 1 nm or more.

Moreover, a distribution curve of pore volume (DVp/dlogdp [cc/g]) on a vertical axis and pore diameter [$\mu$m] on a horizontal axis obtained through measurement of mercury intrusion of the carbon sheet is required to have a peak of 2.0 cc/g or more in a pore diameter range of not less than 0.1 $\mu$m and not more than 10 $\mu$m.

A carbon sheet for which measurement results obtained through measurement of nitrogen adsorption and mercury intrusion satisfy the prescribed conditions set forth above is presumed to be capable of inhibiting growth of dendritic crystals by trapping, in the small-diameter porous structure thereof, lithium deposited in accompaniment to use of an electrical storage device that includes an electrode containing a lithium-containing active material.

<<Porosity>>

The porosity of the carbon sheet is preferably 70% or more, and more preferably 85% or more, and is preferably 99% or less. When the porosity is not less than any of the lower limits set forth above, performance of the carbon sheet in terms of inhibiting lithium dendrite growth can be even further increased. Moreover, when the porosity of the carbon sheet is not more than the upper limit set forth above, strength of the carbon sheet can be increased. Note that the porosity of the carbon sheet can be measured according to a method described in the EXAMPLES section.

<<Thickness of carbon sheet>>

The thickness of the carbon sheet is preferably 50 $\mu$m or more, and is preferably 250 $\mu$m or less, and more preferably 200 $\mu$m or less. The thickness of the carbon sheet can be measured by a film thickness meter (Digital Thickness Gauge "JAN-255" produced by Ozaki Mfg. Co., Ltd.), for example.

<<Porous structure after charge/discharge treatment>>

The carbon sheet preferably has a porous structure with a number-average diameter of not less than 50 nm and not more than 200 nm at the sheet surface when subjected to charge/discharge treatment. Conditions of the charge/-discharge treatment are described in detail in the EXAMPLES section of the present application. The term "charge/-discharge treatment" refers to repeated charging and discharging at a specific interval performed with respect to a produced electrical storage device that has not yet been used.

Moreover, the sheet surface of the carbon sheet after charge/discharge treatment preferably has a porous structure with a number-average diameter of not less than 50 nm and not more than 200 nm. When a porous structure of a size such as set forth above is present at the sheet surface after charge/discharge treatment, performance of the carbon sheet in terms of inhibiting lithium dendrite growth can be even further increased.

With regard to the frequency of appearance of a porous structure with a number-average diameter of not less than 50 nm and not more than 200 nm at the sheet surface after charge/discharge treatment, the frequency of appearance per one image acquired at ×100,000 magnification using an FE-SEM (field emission scanning electron microscope) according to an evaluation method described in the EXAMPLES section of the present disclosure is preferably 2 or more, more preferably 3 or more, and even more preferably 5 or more, and is normally 100 or less. When the frequency of appearance of a porous structure with a number-average diameter of not less than 50 nm and not more than 200 nm at the sheet surface after charge/discharge treatment is in any of the ranges set forth above, performance of the carbon sheet in terms of inhibiting lithium dendrite growth can be even further increased. Note that the size of one image for which frequency of appearance of the porous structure is judged can be 1280 nm × 890 nm.

(Method of producing carbon sheet)

A method of producing the carbon sheet set forth above includes a step of mixing and performing dispersing treatment of a solvent and carbon nanotubes satisfying a specific property to obtain a carbon nanotube dispersion liquid (carbon nanotube dispersion liquid production step) and a step of removing the solvent from the carbon nanotube dispersion liquid to form a carbon sheet (film formation step). The presently disclosed production method including the steps set forth above enables efficient production of the presently disclosed carbon sheet.

The following describes each step.

<Carbon nanotube dispersion liquid production step>

In the carbon nanotube dispersion liquid production step, a solvent and carbon nanotubes satisfying a specific property are mixed and subjected to dispersing treatment to obtain a carbon nanotube dispersion liquid. The above-described CNTs or the above-described CNTs in the form of a CNT assembly can be used as the CNTs satisfying a specific property.

<<Solvent>>

Examples of the solvent include, but are not specifically limited to, water, alcohols such as methanol, ethanol, n-propanol, isopropanol, n-butanol, isobutanol, t-butanol, pentanol, hexanol, heptanol, octanol, nonanol, decanol, and amyl alcohol, ketones such as acetone, methyl ethyl ketone, and cyclohexanone, esters such as ethyl acetate and butyl acetate, ethers such as diethyl ether, dioxane, and tetrahydrofuran, amide polar organic solvents such as N,N-dimethylformamide and N-methylpyrrolidone (NMP), and aromatic hydrocarbons such as toluene, xylene, chlorobenzene, orthodichlorobenzene, and paradichlorobenzene. Just one of these solvents may be used individually, or two or more of these solvents may be used as a mixture. In particular, it is preferable to use water, an alcohol, or a mixture thereof, and more preferable to use water as the solvent for the CNT dispersion liquid. In a case in which water is used as this solvent, this enables good affinity between the carbon sheet and electrolyte solution and improvement of device performance when the carbon sheet produced with the carbon nanotube dispersion liquid in which water is used is adopted in an electrical storage device.

<<Proportional content of carbon nanotubes>>

The proportional content of the carbon nanotubes in the carbon nanotube dispersion liquid is not specifically limited, but is preferably 0.05 mass% or more, more preferably 0.1 mass% or more, and even more preferably 0.2 mass% or more from a viewpoint of dispersibility. Moreover, the proportional content of the carbon nanotubes in the carbon nanotube dispersion liquid is preferably 2.0 mass% or less, more preferably 1.5 mass% or less, and even more preferably 1.0 mass% or less from a viewpoint of dispersibility.

<<Total content of carbon nanotubes and solvent>>

From a viewpoint of reducing residual impurity content in a formed carbon sheet as much as possible, it is preferable that, to as great an extent as possible, the carbon nanotube dispersion liquid does not contain components other than the carbon nanotubes and the solvent. Conversely, it is preferable that the carbon nanotubes and the solvent constitute the vast majority of the presently disclosed carbon nanotube dispersion liquid. Specifically, the total content of the carbon nanotubes and the solvent in the presently disclosed carbon nanotube dispersion liquid is preferably 90 mass% or more, and more preferably 95 mass% or more, and it is even more preferable that the presently disclosed carbon nanotube dispersion liquid does not contain components other than the carbon nanotubes and the solvent.

<<Dispersing treatment>>

From a viewpoint of enhancing properties of an obtained carbon sheet, it is preferable that when dispersing the CNTs in the solvent, dispersing treatment is performed using a media-less high-speed stirring disperser in a manner such as to satisfy the following conditions. Note that preliminary dispersing of the CNTs in the solvent using a stirrer or the like may be performed in advance of the dispersing treatment.

The dispersing time in the dispersing treatment is preferably 15 minutes or more, more preferably 20 minutes or more, and even more preferably 25 minutes or more, and is preferably 45 minutes or less, and more preferably 40 minutes or less. When the dispersing time is in any of the ranges set forth above, performance of the carbon sheet in terms of inhibiting lithium dendrite growth can be even further increased.

The stirring circumferential speed by the media-less high-speed stirring disperser in the dispersing treatment is preferably 18 m/sec or more, and more preferably 20 m/sec or more, and is preferably 40 m/sec or less, and more preferably 38 m/sec or less. When the stirring circumferential speed by the media-less high-speed stirring disperser is in any of the ranges set forth above, performance of the carbon sheet in terms of inhibiting lithium dendrite growth can be even further increased, and strength and porosity of the carbon sheet can be controlled.

<Film formation step>

In the film formation step, the solvent is removed from the CNT dispersion liquid that has been produced in the CNT dispersion liquid production step described above to form a carbon sheet.

<<Formation of carbon sheet through solvent removal>>

The step of removing the solvent from the CNT dispersion liquid to form a carbon sheet can be performed using either of the following methods (A) or (B), for example.

(A) A method in which the CNT dispersion liquid is applied onto a film formation substrate and the applied CNT dispersion liquid is subsequently dried
(B) A method in which the CNT dispersion liquid is filtered using a porous film formation substrate and the resultant filtration residue is dried

Note that the carbon sheet obtained in methods (A) and (B) corresponds to a product obtained by peeling the previously described dried product from the film formation substrate.

[Film formation substrate]

The film formation substrate that is used is not specifically limited and a known substrate may be used in accordance with the intended use of the produced carbon sheet.
Specific examples of the film formation substrate onto which the CNT dispersion liquid is applied in method (A) include a resin substrate, a glass substrate, and a metal substrate. Examples of resin substrates that can be used include substrates made from polyethylene terephthalate (PET), polyethylene naphthalate (PEN), polytetrafluoroethylene (PTFE), polyimides, polyphenylene sulfide, aramids, polypropylene, polyethylene, polylactic acid, polyvinyl chloride, polycarbonates, polymethyl methacrylate, alicyclic acrylic resins, cycloolefin resins, and triacetyl cellulose. Examples of glass substrates that can be used include a substrate made from normal soda glass. Examples of metal substrates that can be used include substrates formed of aluminum, copper, and the like.
Examples of the film formation substrate used to filter the CNT dispersion liquid in method (B) include filter paper and porous sheets formed of cellulose, nitrocellulose, alumina, resins, and the like. Moreover, a membrane filter, for example, can be used as the film formation substrate.

[Application]

In method (A), the CNT dispersion liquid can be applied onto the film formation substrate by any commonly known application method. Specific examples of application methods that can be used include dipping, roll coating, gravure coating, knife coating, air knife coating, roll knife coating, die coating, screen printing, spray coating, and gravure offset.

[Filtration]

In method (B), the CNT dispersion liquid can be filtered by the film formation substrate by any commonly known filtration method. Specific examples of filtration methods that can be used include natural filtration, vacuum filtration, pressure filtration, and centrifugal filtration.

[Drying]

Drying of the CNT dispersion liquid applied onto the film formation substrate in method (A) or of the filtration residue obtained in method (B) can be performed by a commonly known drying method. Examples of drying methods that can be used include hot-air drying, vacuum drying, hot-roll drying, and infrared irradiation. Although no specific limitations are placed on the drying temperature and time, the drying temperature is normally from room temperature to 200°C and the drying time is normally from 0.1 minutes to 150 minutes.

<<After-treatment of carbon sheet>>

In the presently disclosed method of producing a carbon sheet, the carbon sheet that has been formed in the film formation step may optionally be washed.

Washing of the carbon sheet can be performed by using a solvent to wash out impurities remaining in the carbon sheet. No specific limitations are placed on the solvent used in washing. For example, any of the previously described solvents that can be used as the solvent of the CNT dispersion liquid may be used, with use of the same solvent as the solvent of the CNT dispersion liquid being preferable. Contacting of the carbon sheet and the solvent can be performed by immersing the carbon sheet in the solvent or by applying the solvent onto the carbon sheet. Moreover, the carbon sheet can be dried by a known method after the washing.

Furthermore, the presently disclosed method of producing a carbon sheet may optionally include subjecting the carbon sheet formed in the film formation step to pressing in order to further increase the density of the carbon sheet. From a viewpoint of reducing deterioration of characteristics due to damage or destruction of the CNTs, it is preferable that pressing is performed with a pressing pressure of less than 3 MPa, and more preferable that pressing is not performed.

(Laminate)

The presently disclosed laminate includes the presently disclosed carbon sheet set forth above and a separator. More specifically, the presently disclosed laminate includes a carbon sheet arranged adjacently to a separator on at least one side of the separator. Note that the laminate may have a carbon sheet disposed adjacently to just one main surface of a separator or may have carbon sheets disposed adjacently to both main surfaces (front surface and rear surface) of a separator. The separator can be a known conventional separator that can typically be used in lithium ion secondary batteries, lithium ion capacitors, all-solid-state batteries, air batteries, electric double-layer capacitors, or the like without any specific limitations. As a result of the presently disclosed laminate including the presently disclosed carbon sheet, the presently disclosed laminate has excellent performance in terms of inhibiting lithium dendrite growth in a situation in which the presently disclosed laminate is used in an electrical storage device where a lithium-containing material is used. Consequently, the presently disclosed laminate can enhance device characteristics such as cycle characteristics of an electrical storage device.

(Electrical storage device)

The presently disclosed electrical storage device includes an electrode containing a lithium-containing active material and a separator. A feature of the presently disclosed electrical storage device is that the presently disclosed carbon sheet set forth above is interposed between the electrode containing the lithium-containing active material and the separator. In the presently disclosed electrical storage device, it is possible to inhibit lithium that is deposited inside of the device in accompaniment to use of the electrical storage device from growing into the form of lithium dendrites. Consequently, the presently disclosed electrical storage device can inhibit the occurrence of a short circuit or the like caused by a lithium dendrite damaging the separator, for example, and has excellent device characteristics such as cycle characteristics.

The electrical storage device may be a lithium ion secondary battery, a lithium ion capacitor, an all-solid-state battery, an air battery, an electric double-layer capacitor, or the like, for example, without any specific limitations.

Known conventional electrodes and separators can be used as the electrode containing a lithium-containing active material and the separator that can be used to form the electrical storage device. The electrical storage device typically has a structure in which two electrodes (for example, a positive electrode and a negative electrode) are isolated from each other by a separator. In the presently disclosed electrical storage device, it is necessary for the carbon sheet to be interposed between the separator and an electrode that contains a lithium-containing active material among the electrodes that are included in the electrical storage device. By arranging the carbon sheet such as to satisfy this positional relationship, it is possible to effectively inhibit lithium dendrite growth. Note that the carbon sheet may also, as necessary, be interposed between the separator and an electrode that does not contain lithium.

A known conventional production method can be adopted without any specific limitations as the method by which the basic structure of the electrical storage device is created.

EXAMPLES

The following provides a more specific description of the present disclosure based on examples. However, the present disclosure is not limited to the following examples. In the following description, "%" and "parts" used in expressing quantities are by mass, unless otherwise specified.

Note that various measurements and evaluations in the examples and comparative examples were performed as follows.

<Attributes of CNTs>

<<(1) Fourier-transform infrared spectroscopy (FT-IR) of CNT assembly>>

With respect to 10 mg of a CNT assembly, 100 g of water containing sodium dodecylbenzenesulfonate as a surfactant in a concentration of 1 mass% was added, and an ultrasonic bath was used to perform 1 minute of stirring at 45 Hz to obtain 100 mL of a dispersion liquid of the CNT assembly.

The dispersion liquid prepared in this manner was diluted two-fold using a solvent having the same composition. The diluted dispersion liquid was dripped onto and dried on a silicon substrate, and then a Fourier-transform infrared spectrophotometer was used to obtain a spectrum and determine the wavenumber ($cm^{-1}$) at which a peak based on plasmon resonance of the CNTs appeared.

<<(2) Preparation of pore distribution curve (CNT assembly)>>

A BELSORP-mini II (produced by MicrotracBEL Corp.) was used to measure an adsorption isotherm with respect to at least 10 mg of a CNT assembly using liquid nitrogen at 77 K (adsorption equilibrium time taken to be 500 seconds). The CNT assembly was subjected to 12 hours of vacuum degassing at 100°C as pre-treatment. A pore distribution curve for the sample was determined by the BJH method from the amount of adsorption on the adsorption isotherm. A check was made as to whether a largest peak on the pore distribution curve for the CNT assembly was present in a pore diameter range of not less than 1 nm and less than 400 nm.

<<(3) Peak of two-dimensional spatial frequency spectrum (CNT assembly)>>

For a CNT assembly of each example, 0.01 mg of the CNT assembly was placed on a carbon tape and was blown by a blower so as to remove excess CNTs and prepare a sample. The sample was observed by a field emission scanning electron microscope at $\times$ 10,000, and 10 photographs were taken in an arbitrarily extracted 1 cm-square viewing field. The 10 electron microscope images that had been taken were then each subjected to fast Fourier-transform processing to obtain a two-dimensional spatial frequency spectrum. Each of the obtained two-dimensional spatial frequency spectra was subjected to binarization processing, the position of a peak appearing at an outermost side (high frequency side) was determined, and an average value of the peak position was obtained. Note that in the binarization processing, values obtained through fast Fourier-transform processing were taken to be 1 in the case of values of more than 0.75 and were taken to be zero in the case of other values.

<<(4) QSDFT analysis of nitrogen adsorption measurement values for CNTs>>

At least 10 mg of a CNT assembly was taken as an analysis sample and was measured by a fully automatic gas adsorption analyzer AS-iQ-C (produced by Anton Paar) at 77.3 K using nitrogen gas. In this measurement, 3 hours of vacuum degassing was performed at 100°C as pre-treatment. A pore distribution curve for the sample was determined by the BJH method from the amount of adsorption on an adsorption isotherm obtained by this measurement. Micropore analysis of the pore distribution of the sample was performed in accordance with a slit/cylindrical pore analysis model of the QSDFT method. Note that the analysis range for the pore diameter was set as not less than 0.5 nm and not more than 2 nm. Moreover, the size (cc/g) of a peak present at a diameter of 0.966 nm was determined.

<<G/D ratio>>

A microscopic laser Raman spectrophotometer (Nicolet Almega XR produced by Thermo Fisher Scientific) was used to measure a Raman spectrum of CNTs. In the obtained Raman spectrum, the intensity of a G band peak observed near 1590 $cm^{-1}$ and the intensity of a D band peak observed near 1340 $cm^{-1}$ were determined, and then the G/D ratio was calculated.

<Attributes of carbon sheet>

<<Mercury intrusion>>

Measurement of mercury intrusion (AutoPore V9620 produced by Micromeritics Instrument Corp.) was performed with respect to a produced carbon sheet. The obtained data was plotted to obtain a distribution curve of pore volume (DVp/dlogdp [cc/g]) on a vertical axis and pore diameter [μm] on a horizontal axis. A judgement was made as to whether a peak reaching a pore volume of 2.0 cc/g or more was present on this distribution curve in a pore diameter range of not less than 0.0036 μm and not more than 200 μm. A value [μm] of the pore diameter at which the peak reaching a pore volume of 2.0 cc/g or more appeared is shown in Table 1.

<<Nitrogen adsorption>>

Measurement of nitrogen adsorption using a pre-treatment device (BELPREP-vac II produced by MicrotracBEL Corp.) and a main measurement device (BELSORP-mini II produced by MicrotracBEL Corp.) was performed with respect to a produced carbon sheet. The obtained data was plotted to obtain a distribution curve of pore volume (DVp/dlogdp [cc/g]) on a vertical axis and pore diameter [nm] on a horizontal axis. A judgement was made as to whether a peak reaching a pore volume of 1.5 cc/g or more was present on the distribution curve in a pore diameter range of 60 nm or less. A value [nm] of the pore diameter at which the peak reaching a pore volume of 1.5 cc/g or more appeared is shown in Table 1.

<<Porosity>>

The porosity of a carbon sheet was calculated according to the following formulae.

$$\text{Porosity} = (1 - \text{Film density [g/cm}^3]/1.3) \times 100$$

Film density [g/cm$^3$] = Weight of carbon sheet [g]/(Thickness of carbon sheet [cm] $\times$ Area of carbon sheet [cm$^2$])

The density of CNTs was assumed to be 1.3 g/cm$^3$.

<Cycle characteristics>

A produced symmetric cell was subjected to a cycle characteristic test as outlined below. Cycle characteristics were evaluated based on the time elapsed until short circuiting or deactivation occurred.

•    Cycle characteristic test at low capacity

     Charge/discharge current per unit area: 2.0 [mA/cm$^2$]
     Charge/discharge capacity per unit area: 2.0 [mAh/cm$^2$]

•    Cycle characteristic test at high capacity

     Charge/discharge current per unit area: 40 [mA/cm$^2$]
     Charge/discharge capacity per unit area: 120 [mAh/cm$^2$]

When a longer time elapses before short circuiting or deactivation occurs as a result of the cycle characteristic test, this means that a carbon sheet has further enhanced cycle characteristics of the cell.

<Porous structure after cycle characteristic test>

A symmetric cell that had undergone testing of cycle characteristics as described above was disassembled and was washed through immersion in battery grade polycarbonate once and ethyl methyl carbonate twice. Vacuum drying was then performed at room temperature to obtain an observation sample, and the surface of a carbon sheet that had been in contact with a separator was observed using an electron microscope.

An evaluation was made as described below as to whether a porous structure with a number-average diameter of not less than 50 nm and not more than 200 nm was present at the surface of the carbon sheet.

An FE-SEM (field-emission scanning electron microscope) was used as the electron microscope. An electron microscope image was acquired with the observation magnification set as ×100,000. The obtained electron microscope image was imported into image analysis software ImageJ, and the diameters of pores present in one image (1280 nm × 890 nm) were measured. The frequency of appearance of a porous structure with a number-average diameter of not less than 50 nm and not more than 200 nm per one image was evaluated in accordance with the following standard.

•    Frequency of appearance of pores having pore diameter of not less than 50 nm and not more than 200 nm per one image is 5 or more: Porous structure present

- Frequency of appearance of pores having pore diameter of not less than 50 nm and not more than 200 nm per one image is less than 5 or such pores are not present: Porous structure not present

Note that although pores having a diameter of less than 50 nm and pores having a diameter of more than 200 nm were observed in the symmetric cells of the examples, the majority of pores had a diameter in the range of not less than 50 nm and not more than 200 nm.

In contrast, in the case of the symmetric cells of the comparative examples, pores having a diameter of 200 nm or less were not observed, and even when pores were present, the diameter thereof was more than 200 nm.

<Evaluation of dendrite deposition inhibition performance>

A symmetric cell that had undergone testing of cycle characteristics as described above was disassembled and was washed through immersion in battery grade polycarbonate once and ethyl methyl carbonate twice. Vacuum drying was then performed at room temperature to obtain an observation sample, and the surface of a carbon sheet that had been in contact with a separator was observed using an electron microscope. An electron microscope image was imported into image analysis software ImageJ, and a check was made as to whether dendritic crystals were present in the image.

<Synthesis of CNTs>

CNTs used in Examples 1 and 3 (hereinafter, referred to as "CNT_A") were produced by a method in which a source gas was supplied while continuously conveying a particulate catalyst-bearing support by screw rotation in a CNT synthesis step. Specifically, a CNT assembly was produced according to a method disclosed in Example 4 of WO2022/114237A1.

Characteristics of the produced CNT assembly, as typical values, were a G/D ratio of 1.2, a tapped bulk density of 0.02 g/cm$^3$, a CNT average length of 150 $\mu$m, a BET specific surface area of 600 m$^2$/g, an average external diameter of 4.0 nm, and a carbon purity of 99.0 mass%. Measurements of various attributes of the obtained CNT assembly were performed as previously described. The results are shown in Table 1.

(Example 1)

<CNT dispersion liquid production step>

A mixture of 2 g of the CNT_A obtained as described above and 1,998 g of water as a solvent was subjected to dispersing treatment under conditions shown in Table 1 using a Despa Mill (produced by Asada Iron Works Co., Ltd.) as a disperser to produce a CNT dispersion liquid.

<Film formation step>

A vacuum filtration device including a membrane filter was used to perform vacuum suction filtration for at least 12 hours under a condition of 0.09 MPa. Thereafter, a carbon sheet was peeled from the carbon sheet/membrane filter, and the peeled carbon sheet was subjected to 12 hours of vacuum heat treatment at 150°C to obtain a carbon sheet. The obtained carbon sheet had an area density of 2 mg/cm$^2$ and a thickness of 100 $\mu$m. Various attributes of the carbon sheet were evaluated. The results are shown in Table 1.

<Production of symmetric cell>

A product in which the carbon sheet obtained as described above was arranged on one side of a lithium layer (produced by Honjo Metal Co., Ltd.) of 300 $\mu$m in thickness was produced as one set. Such products were arranged with the carbon sheet-side in contact with a separator made of polyethylene (thickness 20 $\mu$m; produced by W-Scope Corporation) to produce a laminate having a stacking order of lithium layer/carbon sheet/separator/carbon sheet/lithium layer. This laminate was placed inside of a coil cell case of 1.6 cm in diameter and was housed therein with electrolyte solution. A LiPF$_6$ solution of 1 M in concentration (solvent: mixed solvent of ethylene carbonate (EC)/diethyl carbonate (DEC) = 1/1 (volume ratio); additive: containing 5 volume% (solvent ratio) of fluoroethylene carbonate (produced by Sigma Aldrich)) was used as the electrolyte solution. In addition, a coin cell cap was placed on the case, and crimping was performed using a manual hydraulic press for coil cell assembly (produced by MTI) to produce a symmetric cell. Judgement of a porous structure after charge/discharge treatment, testing of cycle characteristics at low capacity, and judgement of the presence of a porous structure and lithium dendrite deposition after a cycle characteristic test were performed with respect to the obtained symmetric cell as previously described. The results are shown in Table 1.

(Example 2)

Various operations, measurements, and evaluations were performed in the same way as in Example 1 with the exception that SGCNTs obtained by the super growth method (product name: ZEONANO SG101; produced by Zeon Corporation) were used as CNTs in production of a CNT dispersion liquid. The results are shown in Table 1. The thickness of the obtained carbon sheet was 150 μm.
Note that various attributes of the SGCNTs were as follows.

BET specific surface area: 1,000 $m^2$/g
Carbon purity: 99.5 mass% or higher

(Example 3)

A symmetric cell produced in the same way as in Example 1 was subjected to testing of cycle characteristics at high capacity. Moreover, judgement of the presence of a porous structure and lithium dendrite deposition after the cycle characteristic test was performed with respect to the symmetric cell that had undergone testing of cycle characteristics at high capacity. The results are shown in Table 1.

(Example 4)

A symmetric cell produced in the same way as in Example 2 was subjected to testing of cycle characteristics at high capacity. Moreover, judgement of the presence of a porous structure and lithium dendrite deposition after the cycle characteristic test was performed with respect to the symmetric cell that had undergone testing of cycle characteristics at high capacity. The results are shown in Table 1.

(Comparative Example 1)

A symmetric cell was produced in the same way as in Example 1 with the exception that Tuball (product name; produced by Tuball) was used as CNTs in production of a CNT dispersion liquid. Judgement of a porous structure after charge/discharge treatment, testing of cycle characteristics at low capacity and cycle characteristics at high capacity, and judgement of the presence of a porous structure and lithium dendrite deposition after a cycle characteristic test were performed with respect to the produced symmetric cell as previously described. The results are shown in Table 1.

(Comparative Example 2)

A symmetric cell was produced in the same way as in Example 1 with the exception that K-nanos 100T (product name; produced by Knano Graphene Technology Co., Ltd.) were used as CNTs in production of a CNT dispersion liquid. Judgement of a porous structure after charge/discharge treatment, testing of cycle characteristics at low capacity and cycle characteristics at high capacity, and judgement of the presence of a porous structure and lithium dendrite deposition after a cycle characteristic test were performed with respect to the produced symmetric cell as previously described. The results are shown in Table 1.

[Table 1]

| | | | Example 1 | Example 2 | Example 3 | Example 4 | Comparative Example 1 | Comparative Example 2 |
|---|---|---|---|---|---|---|---|---|
| CNTs | | Type | CNT-A | SGCNT | CNT-A | SGCNT | Tuball | Knanos-400T |
| | | BET specific surface area [m²/g] | 600 | 1000 | 600 | 1000 | 370 | 212 |
| | | (1) FIR resonance peak [cm⁻¹] | 820 | 230 | 820 | 230 | 40 | Not detected |
| | | (2) Presence of largest peak in pore diameter range of 100 nm to 400 nm | Yes | Yes | Yes | Yes | No | No |
| | | (3) Position of spatial frequency spectrum peak at 1 μm⁻¹ to 100 μm⁻¹ [μm⁻¹] | 2.5 | - | 2.5 | - | - | - |
| | | (4) QSDF analysis (size of peak present at diameter of 0.966 nm) [cc/g] | 0.6 | 1.7 | 0.6 | 1.7 | 0 | 0 |
| Dispersion liquid production method | | Used device | Despa Mill (produced by Asada Iron Works) | | | | | |
| | | Presence of dispersant | No | | | | | |
| | | Time [min] | 30 | | | | | |
| | | Stirring circumferential speed [m/sec] | 36 | | | | | |
| Carbon sheet | Mercury intrusion | Position of peak of 2 cc/g or more in range of 0.1 μm to 10 μm [μm] | 2.0 | 2.8 | 2.0 | 2.8 | No peak | No peak |
| | Nitrogen adsorption | Position of peak of 1.5 cc/g or more in pore diameter range of 60 nm or less [nm] | 2.0 | 3.5 | 2.0 | 3.5 | Outside range | Outside range |
| | | Porosity [%] | 95 | 85 | 95 | 85 | 75 | 75 |
| Low-capacity cycle test | Post-test carbon sheet | Presence of dendrites | No | No | - | - | Yes | Yes |
| | | Porous structure | Yes | Yes | - | - | No | No |
| | | Cycle characteristics [hr] | 1000 | 1000 | - | - | - | - |

(continued)

| | | | Example 1 | Example 2 | Example 3 | Example 4 | Comparative Example 1 | Comparative Example 2 |
|---|---|---|---|---|---|---|---|---|
| High-capacity cycle test | Post-test carbon sheet | Presence of dendrites | - | - | No | No | Yes | Yes |
| | | Porous structure | - | - | Yes | Yes | No | No |
| | Cycle characteristics [hr] | | - | - | 1000 | 2 | 0.1 | 0.1 |

It can be seen from Table 1 that a carbon sheet having excellent performance in terms of inhibiting lithium dendrite growth was obtained in Examples 1 to 4.

INDUSTRIAL APPLICABILITY

According to the present disclosure, it is possible to provide a carbon sheet having excellent performance in terms of inhibiting lithium dendrite growth and a method of producing this carbon sheet.

Moreover, according to the present disclosure, it is possible to provide a laminate and an electrical storage device that include a carbon sheet having excellent performance in terms of inhibiting lithium dendrite growth.

**Claims**

1. A carbon sheet comprising carbon nanotubes, wherein

    a distribution curve of pore volume (Dv(logd)) in units of cc/g on a vertical axis and pore diameter in units of nm on a horizontal axis obtained through QSDFT analysis of data obtained through measurement of nitrogen adsorption of the carbon nanotubes has a peak of 0.3 cc/g or more in a pore diameter range of not less than 0.9 nm and not more than 1.1 nm,
    a distribution curve of pore volume (DVp/dlogdp) in units of cc/g on a vertical axis and pore diameter in units of nm on a horizontal axis obtained through measurement of nitrogen adsorption of the carbon sheet has a peak of 1.5 cc/g or more in a pore diameter range of 60 nm or less, and
    a distribution curve of pore volume (DVp/dlogdp) in units of cc/g on a vertical axis and pore diameter in units of $\mu$m on a horizontal axis obtained through measurement of mercury intrusion of the carbon sheet has a peak of 2.0 cc/g or more in a pore diameter range of not less than 0.1 $\mu$m and not more than 10 $\mu$m.

2. The carbon sheet according to claim 1, wherein the carbon nanotubes include single-walled carbon nanotubes in a proportion of 50 mass% or more.

3. The carbon sheet according to claim 1, wherein the carbon sheet has a porous structure with a number-average diameter of not less than 50 nm and not more than 200 nm at a sheet surface when subjected to charge/discharge treatment.

4. A laminate comprising: the carbon sheet according to any one of claims 1 to 3; and a separator.

5. An electrical storage device comprising: an electrode containing a lithium-containing active material; and a separator, wherein the carbon sheet according to any one of claims 1 to 3 is interposed between the electrode and the separator.

6. The electrical storage device according to claim 5, wherein a porous structure with a number-average diameter of not less than 50 nm and not more than 200 nm is formed at a surface of the carbon sheet after charging and discharging.

7. A method of producing a carbon sheet containing carbon nanotubes, the method comprising:

    performing dispersing treatment of a mixture of a solvent and carbon nanotubes for which a distribution curve of pore volume (Dv(logd)) in units of cc/g on a vertical axis and pore diameter in units of nm on a horizontal axis obtained through QSDFT analysis of data obtained through measurement of nitrogen adsorption has a peak of 0.3 cc/g or more in a pore diameter range of not less than 0.9 nm and not more than 1.1 nm to obtain a carbon nanotube dispersion liquid; and

removing the solvent from the carbon nanotube dispersion liquid to form a carbon sheet.

## INTERNATIONAL SEARCH REPORT

| International application No. |
| --- |
| **PCT/JP2023/028311** |

**A. CLASSIFICATION OF SUBJECT MATTER**

*C01B 32/158*(2017.01)i; *H01G 11/36*(2013.01)i; *H01G 11/86*(2013.01)i; *H01M 10/058*(2010.01)i; *H01M 50/449*(2021.01)i
FI:  C01B32/158; H01M10/058; H01G11/36; H01G11/86; H01M50/449

According to International Patent Classification (IPC) or to both national classification and IPC

**B. FIELDS SEARCHED**

Minimum documentation searched (classification system followed by classification symbols)

C01B32/158; H01G11/36; H01G11/86; H01M10/058; H01M50/449

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2022/114235 A1 (ZEON CORPORATION) 02 June 2022 (2022-06-02) claims, paragraphs [0043], [0044], [0081]-[0087], fig. 2, 3 | 1-3, 7 |
| Y | | 4 |
| A | | 5, 6 |
| Y | JP 2022-91631 A (MAXELL, LIMITED) 21 June 2022 (2022-06-21) paragraph [0013] | 4 |
| A | WO 2022/158376 A1 (NATIONAL INSTITUTE FOR MATERIALS SCIENCE) 28 July 2022 (2022-07-28) entire text | 1-7 |
| A | CN 110444767 B (UNIVERSITY OF SCIENCE AND TECHNOLOGY OF CHINA) 10 December 2021 (2021-12-10) entire text | 1-7 |

☐ Further documents are listed in the continuation of Box C.　　☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **06 October 2023** | **17 October 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/028311**

| Patent document cited in search report | | | Publication date (day/month/year) | Patent family member(s) | Publication date (day/month/year) |
|---|---|---|---|---|---|
| WO | 2022/114235 | A1 | 02 June 2022 | (Family: none) | |
| JP | 2022-91631 | A | 21 June 2022 | (Family: none) | |
| WO | 2022/158376 | A1 | 28 July 2022 | (Family: none) | |
| CN | 110444767 | B | 10 December 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006011655 A1
- WO 2022114235 A1
- WO 2022114237 A1

### Non-patent literature cited in the description

- Robust Expandable Carbon Nanotube Scaffold for Ultrahigh-Capacity Lithium-Metal Anodes. **ZHAO-WEI SUN et al.** Advanced Materials, Germany. WILEY-VCH, 2018, vol. 30, 1800884
- Suppressing Li Metal Dendrites Through a Solid Li-Ion Backup Layer. **RODRIGO V. SALVATIERRA et al.** Advanced Materials, Germany. WILEY-VCH, 2018, vol. 30, 1803869
- **T. MORIMOTO et al.** Length-Dependent Plasmon Resonance in Single-Walled Carbon Nanotubes. *ACS NANO*, 2014, vol. 8 (10), 9897-9904